# EUROPEAN PATENT SPECIFICATION

(11) **EP 3 708 434 B1**
(45) Date of publication and mention of the grant of the patent: **14.02.2024**
(21) Application number: 20162036.6
(22) Date of filing: 10.03.2020
(51) Int. Cl.: B60R 16/02, H01B 13/012

(54) **WIRE HARNESS ROUTING SUPPORTING DEVICE AND WIRE HARNESS ROUTING SUPPORTING METHOD**
KABELBAUMFÜHRUNGSUNTERSTÜTZENDE VORRICHTUNG UND KABELBAUMFÜHRUNGSUNTERSTÜTZENDES VERFAHREN
DISPOSITIF ET PROCÉDÉ DE ROUTAGE DE FAISCEAU DE CÂBLES

(30) Priority: 14.03.2019 JP 2019047602
(43) Date of publication of application: 16.09.2020
(73) Proprietor: Proterial, Ltd., Tokyo 135-0061 (JP)
(72) Inventor: KAWASE, Kenji, Tokyo (JP); YAMAMOTO, Raifu, Tokyo (JP); AOKI, Katsuju, Tokyo (JP); KOBAYASHI, Takumi, Tokyo (JP)
(74) Representative: Betten & Resch

(56) References cited:
- EP-A1- 3 065 145
- EP-A1- 3 301 688
- EP-A2- 2 528 001
- JP-B2- 6 319 486
- US-A1- 2008 172 722

## Description

### Cross-Reference to Related Application

The present application is based on Japanese patent application No.2019-047602 filed on March 14, 2019.

### BACKGROUND OF THE INVENTION

### 1. FIELD OF THE INVENTION

The present invention relates to a wire harness routing supporting device and a wire harness routing supporting method.

### 2. DESCRIPTION OF THE RELATED ART

A vehicle wire harness is configured as an assembly unit (ASSY) by bundling a plurality of electric wires together configured to be connected to devices within a vehicle, with a tube or an adhesive tape or the like. In a wire harness routing operation in the vehicle, the use of the wire harness makes it possible to route the plurality of bundled electric wires at a time as the wire harness, and thereby enhance the efficiency of the routing operation, as compared to a case where the plurality of electric wires unbundled are individually routed.

For example, in a train vehicle such as a train or the like, a very long wire harness having a total length of several tens of meters is used, and in addition, it may also be necessary to route several thousands or several tens of thousands of electric wires in total number, so efficiently performing the routing operation is desired. In view of this, the present applicant has proposed a wire harness routing supporting device configured to in turn display the respective routing paths of the plurality of electric wires on a display device in accordance with a preset order of the wire routing operation of the plurality of electric wires (see Japanese Patent No. 6319486).

[Patent Document 1] Japanese Patent No. 6319486

### SUMMARY OF THE INVENTION

Now, because, as described above, in a train vehicle such as a train or the like, it is necessary to wire a very large number of electric wires, such a human error as to cause a wire routing different from a wire routing indicated on the display device may occur.

In view of the foregoing, it is an object of the present invention to provide a wire harness routing supporting device and a wire harness routing supporting method that are configured to be able to more securely perform a routing operation.

For the purpose of solving the above-described problem, the present invention provides a wire harness routing supporting device, according to claim 1.

Further, for the purpose of solving the above-described problem, the present invention provides a wire harness routing supporting method, according to claim 5.

### Points of the invention

According to the present invention, it is possible to provide the wire harness routing supporting device and the wire harness routing supporting method that are configured to be able to more securely perform the routing operation.

### BRIEF DESCRIPTION OF THE DRAWINGS

**FIG. 1** is a schematic configuration diagram showing a wire harness routing supporting device according to one embodiment of the present invention.
**FIG. 2** is a diagram showing one example of a display screen for a progress status.
**FIG. 3** is a flow chart showing a control flow in a collating section.
**FIG. 4** is a schematic configuration diagram showing a wire harness routing supporting device according to one modification to the present invention.

### DETAILED DESCRIPTION OF THE PREFERRED EMBODIMENTS

### [Embodiment]

An embodiment of the present invention will be described below in conjunction with the accompanying drawings.

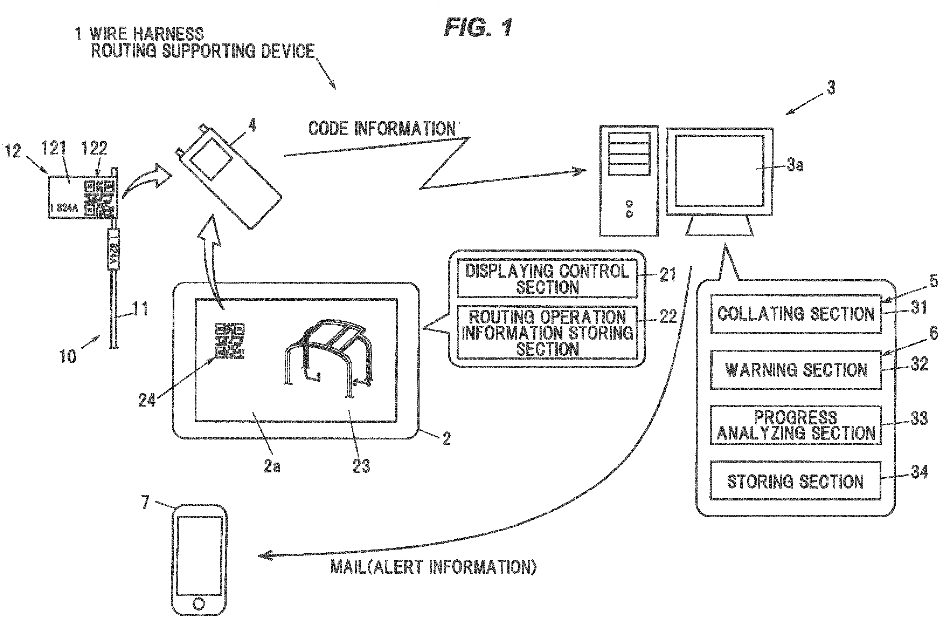

**FIG. 1** is a schematic configuration diagram showing a wire harness routing supporting device according to the present embodiment. As shown in **FIG. 1****,** a wire harness routing supporting device **1** is configured to be used in routing in a routing target a wire harness **10** including a plurality of electric wires **11** therein, to support a routing operation. Herein, a case where the routing target is a train vehicle will be described. Although the wire harness **10** includes the plurality of electric wires **11,** only one of the plurality of electric wires **11** is shown in **FIG. 1****.**

The one electric wire **11** is configured as a linear shape conductor coated with an electrical insulating member around its outer periphery, but that one electric wire **11** may, as with a LAN cable, integrally be configured in such a manner that a plurality of the linear shape conductors are coated with the electrical insulating members around their outer peripheries respectively, and then covered together with an outer sheath therearound. Herein, the electrical insulating members are made of an electrically insulative resin and may be configured as one layer or a plurality of layers. The outer sheath may be formed by solid extrusion in such a manner as to impregnate the spaces between the electrical insulating members or may be formed in a tubular shape.

The wire harness routing supporting device **1** includes a work terminal **2** including a display device **2**a, and an administrating terminal **3** including a display device **3**a, which is being provided separately from the work terminal **2.** The work terminal **2** is configured to be carried by an operator who performs the routing operation of the wire harness **10** during the routing operation, and be able to use a portable information terminal such as a notebook personal computer or a tablet terminal, or a smartphone or the like. Herein is shown a case where a tablet terminal is used as the work terminal **2.** As the administrating terminal **3,** for example, a personal computer can be used.

The wire harness routing supporting device **1** includes a displaying control section **21** configured to in turn display the respective routing paths of the plurality of electric wires **11** on the display device **2**a of the work terminal **2** in accordance with a preset order of the wire routing operation of the plurality of electric wires **11.** The displaying control section **21** is being mounted in the work terminal **2** and is configured as an appropriate combination of a computing element, a memory, an interface, a hard disk, a software and the like. Further, the work terminal **2** is mounted with a routing operation information storing section **22** configured to store the contents of the wire routing operation.

In the present embodiment, images **23** configured to indicate the respective routing paths of the plurality of electric wires **11** and the like are being prestored in the routing operation information storing section **22** of the work terminal **2,** and the displaying control section **21** of the work terminal **2** is configured in such a manner as to in turn display the images **23** on the display device **2**a of the work terminal **2** like a slide show in accordance with the preset order of the wire routing operation of the plurality of electric wires **11.** The images **23** include an image of the vehicle (images of a frame, devices, and the like of the vehicle) and images of the routing paths (the respective routing paths of the plurality of electric wires **11**) of the wire harness **10.** For example, the routing paths (the respective routing paths of the plurality of electric wires **11**) of the wire harness **10** are configured based on **3**D data of the vehicle (a frame, devices, and the like of the vehicle) and a routing list (the devices to be connected together by each of the plurality of electric wires **11,** types of each of the plurality of electric wires **11,** lengths of each of the plurality of electric wires **11,** and identification information on each of the plurality of electric wires **11**). Note that the configuration of the displaying control section **21** of the work terminal **2** is not limited to the foregoing, but the displaying control section **21** of the work terminal **2** may be configured in such a manner that, for example, a wiring model of the wire harness is prestored in the routing operation information storing section **22** of the work terminal **2** as **3**D CAD data, to display a three-dimensional image on the display device **2**a of the work terminal **2** based on that **3**D CAD data. In this manner, in the present embodiment, the display form with the displaying control section **21** is not particularly limited.

In the present embodiment, identification marks **12,** which are configured to identify each of the plurality of electric wires **11,** are being fitted to the respective one end portions of the plurality of electric wires **11,** respectively, constituting the wire harness **10.** Note that the plurality of electric wires **11** may be bundled together and may be fitted with an identification mark **12** on a bundled portion thereof as an area label indicating a wiring destination. In the present embodiment, the identification marks **12** are each made of a mark tape **121** with a respective two-dimensional code (a QR code (registered trademark)) **122** being printed thereon. Note that the codes to be printed on the mark tapes **121** are not limited to the two-dimensional codes (the QR codes (registered trademark)) **122,** but that bar codes may be printed on the mark tapes **121,** respectively. In addition, IC tags or RFID tags can be used as the identification marks **12,** respectively. Furthermore, the identification marks **12** may be printed on the outer peripheries of the plurality of electric wires **11** (the outer peripheries of the outer sheaths of the plurality of electric wires **11**) respectively.

The identification marks **12** (the mark tapes **121**) are ones that are originally used in manufacturing the wire harness **10,** and are ones that are fitted on the plurality of electric wires **11** respectively for collation during wire laying out operation to arrange the plurality of electric wires **11.** In the present embodiment, the identification marks **12** are utilized to perform the collation of the plurality of electric wires **11** during wire routing operation (during rigging operation), which will be described later. Note that although not shown, the wire harness **10** may include connectors, which are provided on the respective one end portions of the plurality of electric wires **11** respectively. For example, when the connectors are provided together at the respective one end portions of the plurality of electric wires **11,** the identification marks **12** may be fitted to each of the connectors, respectively. Further, when the plurality of electric wires **11** are bundled together, the collation of the identification mark **12** to be used as the area label (the identification mark **12** fitted to the bundled portion of the plurality of electric wires **11**) may be performed.

In the present embodiment, the displaying control section **21** of the work terminal **2** is configured in such a manner as to display, on the display device **2**a of the work terminal **2,** codes **24** corresponding to the respective identification marks **12** of the plurality of electric wires **11** (or the respective identification marks **12** of the respective connectors of the plurality of electric wires **11**), respectively, to be subjected to the wire routing operation. Herein is shown a case where, for each of the plurality of electric wires **11,** a respective two-dimensional code is displayed on the display device **2**a of the work terminal **2** as the respective code **24,** but the respective code **24** may be a respective bar code. For each of the plurality of electric wires **11,** the respective two-dimensional code **122** printed on the respective identification mark **12** and the respective code **24** displayed on the display device **2**a of the work terminal **2** may not be totally the same, but, for example, may be the respective codes having a one to one correspondence such as the respective codes with the same contents partially contained in code information therein or the like. Herein, as one example, a case where, for each of the plurality of electric wires **11,** the same respective two-dimensional code as the respective two-dimensional code **122** printed on the respective identification mark **12** is used as the respective code **24** will be described.

The form in which the respective code **24** is displayed on the display device **2**a of the work terminal **2** is not particularly limited, but, for example, the respective code **24** may be displayed in such a manner as to be superimposed on a predetermined position (predetermined coordinates) on the images **23** indicating the respective routing paths of the plurality of electric wires **11** and the like, or, as the images **23,** it is also possible to use the images with the respective code **24** being pre-embedded therein.

The wire harness routing supporting device **1** according to the present embodiment includes a code reader **4** as a reading in section, which is configured to, in the wire routing operation of each of the plurality of electric wires **11,** read in the respective identification mark **12** and the respective code **24,** and a wire routing operation collating means **5** including a collating section **31,** which is configured to collate information in the respective identification mark **12** having been read in by the code reader **4,** and information in the respective code **24** having been read in by the code reader **4.**

In the present embodiment, the code reader **4** used as the reading in section is configured to be able to transmit the read in code information (the code information in the two-dimensional code **122** printed on the identification mark **12** and the code information in the code **24** displayed on the display device **2**a of the work terminal **2**) to the administrating terminal **3** by means of a wireless communication. As the code reader **4,** e.g., a mobile phone equipped with a camera may be used. Note that the configuration of the code reader **4** is not limited to the foregoing, but that the code reader **4** may be configured in such a manner as to be able to transmit the read in code information to the administrating terminal **3** by means of a wired communication.

The collating section **31** is being mounted in the administrating terminal **3** and is configured as an appropriate combination of a computing element, a memory, an interface, a hard disk, a software and the like. At the start (or at the end) of the wire routing operation of each of the plurality of electric wires **11,** the operator who performs the wire routing operation reads in, with the code reader **4,** the two-dimensional code **122** printed on the identification mark **12** and the code **24** displayed on the display device **2**a of the work terminal **2.** In the present embodiment, the operator routes each one of the plurality of electric wires **11,** and connects the one thereof to a device within the train vehicle, and thereafter reads in, with the code reader **4,** the code **24** displayed on the display device **2**a of the work terminal **2,** and the two-dimensional code **122** printed on the identification mark **12.** Note that the codes **24** and **122** of each one of the plurality of electric wires **11** may be read in both before the routing of the one of the plurality of electric wires **11** and after the connection of the one of the plurality of electric wires **11** to the device within the train vehicle. The collating section **31** mounted in the administrating terminal **3** is configured to collate the code information in the two-dimensional code **122** having been received from the code reader **4,** and the code information in the code **24** having been received from the code reader **4,** and make a decision as to whether both the code information in the two-dimensional code **122** and the code information in the code **24** are matching each other (or are in correspondence with each other). As a result of the code information collation in the collating section **31,** if the code information in the two-dimensional code **122** and the code information in the code **24** are matching each other (or are in correspondence with each other), then the collating section **31** stores in the storing section **34** of the administrating terminal **3** the information indicating that the one of the plurality of electric wires **11** has been routed (the information indicating that the wire routing operation of the one of the plurality of electric wires **11** has been completed). In addition, each time the wire routing operation of the one of the plurality of electric wires **11** is performed, the collating section **31** stores, in the storing section **34** of the administrating terminal **3,** a time at which the code information collation has been performed (for example, a time at which the collating section **31** has determined that the code information in the two-dimensional code **122** and the code information in the code **24** are matching each other).

In addition, the collating section **31** mounted in the administrating terminal **3** includes a storing means configured to, when the code information collation has been performed on all of the plurality of electric wires **11** of the wire harness **10,** store in the storing section **34** of the administrating terminal **3** the information indicating that that wire harness **10** has been routed. For example, the storing means of the collating section **31** may be configured in such a manner as to, when the routing operation of the wire harness **10** has been ended, display on a display screen of the work terminal **2** the code **24** indicating that the routing operation of that wire harness **10** has been ended, and when this code **24** has been read in, store in the storing section **34** of the administrating terminal **3** the information indicating that that wire harness **10** has been routed. In addition, for example, the storing means of the collating section **31** may be configured in such a manner as to, when one of the plurality of electric wires **11** (a preset specific one of the plurality of electric wires **11**) to be last subjected to the wire routing operation in the routing operation of the wire harness **10** has been routed, store in the storing section **34** of the administrating terminal **3** the information indicating that that wire harness **10** has been routed. The storing means of the collating section **31** also stores a time at which the wire harness **10** has been routed, in the storing section **34** of the administrating terminal **3.**

Since, in the above described manner, the times at which the respective wire routing operations of the plurality of electric wires **11** have been started or ended are stored in the storing section **34** of the administrating terminal **3,** it is possible to afterward know which of the respective wire routing operations of the plurality of electric wires **11** takes (take) time, so it is possible to take an effective approach to operation improvement to ensure improvement of the time-consuming wire routing operation(s). As a result, the operation efficiency of the routing operation of the wire harness **10** can be enhanced, thereby allowing the productivity of the train vehicle or the like to become high. In addition, by taking statistics of the times taken in the respective wire routing operations of the plurality of electric wires **11,** it is possible to set respective standard routing times, which are respective standard operating times in the respective wire routing operations of the plurality of electric wires **11.** By comparing these respective standard routing times and respective actual operating times, it is possible to determine whether the respective operations are faster or slower than usual.

In addition, the wire harness routing supporting device **1** includes a warning means **6** configured to, when, as a result of the code information collation of each of the plurality of electric wires **11** with the collating section **31,** the code information in the identification mark **12** and the code information in the code **24** do not match each other, generate a warning to the operator performing the routing operation. In the present embodiment, the warning means **6** includes a warning section **32** configured to, when, as a result of the code information collation of each of the plurality of electric wires **11** with the collating section **31,** the collating section **31** has determined that the code information in the two-dimensional code **122** on the identification mark **12** and the code information in the code **24** do not match each other, create a mail including alert information, and transmit that mail to a mobile phone (smartphone) **7** of the operator. The warning section **32** is being mounted in the administrating terminal **3,** and is configured as an appropriate combination of a computing element, a memory, an interface, a hard disk, a software and the like.

Note that the warning method in the warning means **6** is not limited to the foregoing, but that, for example, the warning section **32** of the warning means **6** may be configured in such a manner as to use a mail function or the like to transmit the alert information to the display device **2**a of the work terminal **2,** and the display device **2**a of the work terminal **2** may be equipped with an additional function of generating an alarm with sound or light, or a specific display, or the like when receiving that alert information. Further, the warning section **32** of the warning means **6** may be configured in such a manner as to transmit the alert information to the code reader **4,** and the code reader **4** may be equipped with an additional function of generating an alarm with sound or light, or a specific display, or the like when receiving that alert information. Furthermore, the warning means **6** may be configured in such a manner as to include a warning device that is configured separately from the work terminal **2** and the code reader **4,** and configured to generate a warning with sound or light or the like when receiving the alert information.

The provision of the warning means **6** allows the operator to recognize that the respective wire routing operations of the plurality of electric wires **11** are being performed in the correct wire routing order of the plurality of electric wires **11** unless the warning is generated. Note that the warning means **6** may be replaced with a collation result transmitting means, which is configured to transmit both matched code information and unmatched code information resulting from the code information collation of the code information in the respective two-dimensional codes **122** and the code information in the respective codes **24** of the plurality of electric wires **11** with the collating section **31.** The collation result transmitting means may be configured in such a manner as to include, for example, a device or the like that is configured to generate two different types of sounds, a first type of sound configured to be generated when the code information in the two-dimensional code **122** and the code information in the code **24** of each of the plurality of electric wires **11** match each other, and a second type of sound configured to be generated when the code information in the two-dimensional code **122** and the code information in the code **24** of each of the plurality of electric wires **11** do not match each other.

In addition, the wire harness routing supporting device **1** is configured to further include a progress analyzing section **33** configured to analyze a progress status of the routing operation of the wire harness **10** based on the information (the collation results and the collation times) having been stored in the storing section **34** of the administrating terminal **3.** The progress analyzing section **33** is being mounted in the administrating terminal **3,** and is configured as an appropriate combination of a computing element, a memory, an interface, a hard disk, a software and the like.

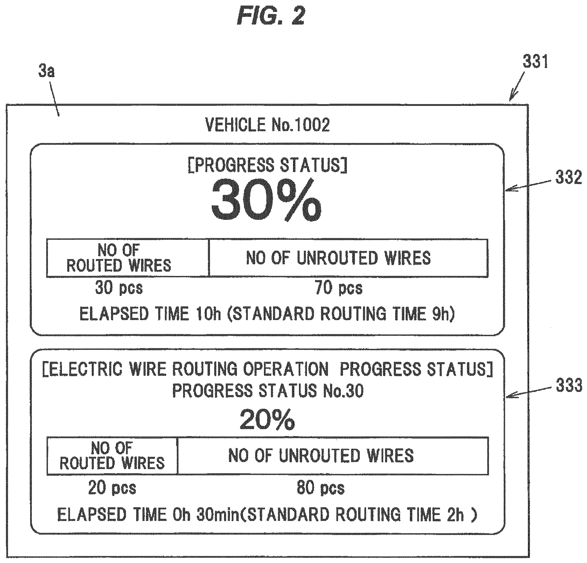

The progress analyzing section **33** of the administrating terminal **3** is configured to display the progress status obtained by the analysis on the display device **3a** of the administrating terminal **3** in real time. **FIG. 2** is a diagram illustrating one example of a display screen **331** for the progress status. As shown in **FIG. 2****,** the display screen **331** for the progress status is composed of an overall progress information displaying region **332** configured to display overall progress information of the train vehicle, and an individual progress information displaying region **333** configured to display a progress status of the routing operation of the wire harness **10** currently being routed.

The progress analyzing section **33** of the administrating terminal **3** is configured to display in the overall progress information displaying region **332** to what extent the overall wire routing operation of the train vehicle has been progressing, based on the preset total number of the wire harnesses **10** to be routed in the train vehicle and the information on the routed wire harnesses **10** having been stored in the storing section **34** of the administrating terminal **3.** In the example of **FIG. 2****,** the overall progress information displaying region **332** in the display screen **331** for the progress status is configured to display therein the proportion of the number of the wire harnesses **10** having been routed to the total number of the wire harnesses **10** to be routed, the number of the wire harnesses **10** having been routed, the number of the wire harnesses **10** unrouted, the elapsed time from the routing starting time, and the preset standard routing time. Note that, as the routing starting time, a time at which the first collating has been performed may be used. Alternatively, the operator may read in their own operator identifying code at the start of the routing operation, so as to use a time at which that operator identifying code has been read in, as the routing starting time. Further, the operator identifying code may be stored in the storing section **34** of the administrating terminal **3** so as to be able to identify the operator having performed the routing of each wire harness **10.**

In the example of **FIG. 2****,** the individual progress information displaying region **333** in the display screen **331** for the progress status is configured to display therein the wire harness number (name or ID), the proportion of the number of the electric wires **11** having been routed to the total number of the electric wires **11** to be routed, the number of the electric wires **11** having been routed, the number of the electric wires **11** unrouted, the elapsed time from the routing starting time, and the preset standard routing time. Note that the display contents of the display screen **331** for the progress status can appropriately be configured, but are not limited to those shown in **FIG. 2****.**

The wire harness routing supporting device **1** may be configured in such a manner that the analysis result of the progress status with the progress analyzing section **33** can be externally referenced via a network. This makes it possible to, for example, in a production factory of the wire harness **10,** perform the production of the wire harness **10** in a timely manner in view of the progress status of the routing operation of the wire harness **10.**

### (Control flow in the collating section 31)

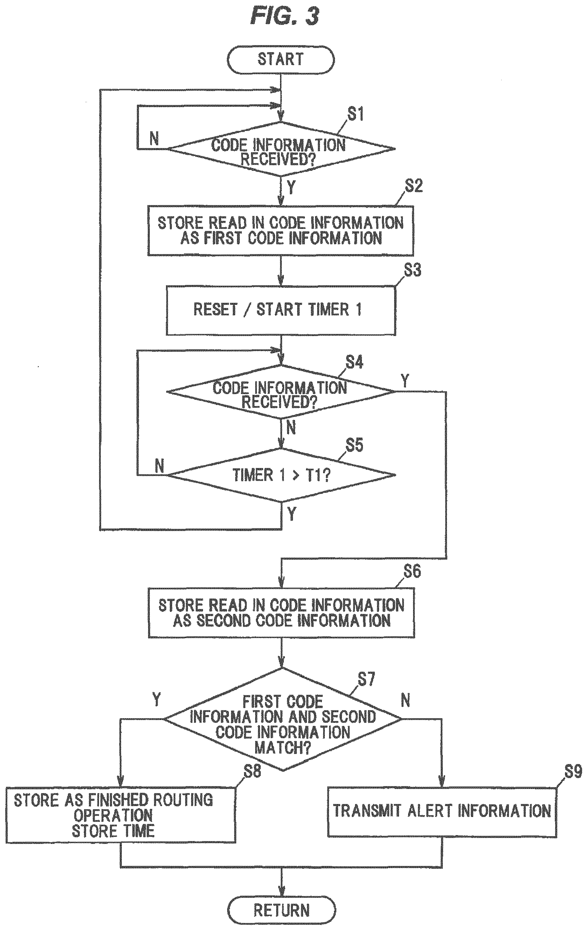

**FIG. 3** is a flow chart showing a control flow in the collating section **31.** The collating section **31** is configured in such a manner as to repeatedly execute the control flow of **FIG. 3****.** Prior to the control flow of **FIG. 3****,** the displaying control section **21** of the work terminal **2** displays on the display device **2**a of the work terminal **2** the code **24** corresponding to the identification mark **12** of a first electric wire **11** (or a first connector) of the plurality of electric wires **11** to be subjected to the wire routing operation.

As shown in **FIG. 3****,** first, in step S**1**, the collating section **31** makes a decision as to whether the code information (the information included in the code **24**) has been received from the code reader **4.** If a No decision is made in step S**1,** then step S**1** is repeated. If a Yes decision is made in step S**1**, then, in step **S2,** the code information having been received in step S1 is stored as the first code information.

After that, in step **S3,** a timer **1** is reset and started, and subsequently in step S**4,** the collating section **31** makes a decision as to whether the code information (the information included in the two-dimensional code **122**) has been received from the code reader **4.** If a No decision is made in step S**4,** then, in step S**5,** the collating section **31** makes a decision as to whether the time in the timer **1** is longer than a predetermined threshold time T**1**, and if a No decision is made in step S**5,** then the flow returns to step S**4.** If a Yes decision is made in step S**5,** then the elapsed time from when the code information has first been read in is too long, so the flow returns to step S**1.**

If a Yes decision is made in step S**4,** then, in step S**6,** the collating section **31** stores the code information (the information included in the two-dimensional code **122**) having been received in step S**4** as the second code information. After that, in step S**7,** the collating section **31** makes a decision as to whether the first code information and the second code information are matching each other. Although herein the case where the code information in the code **24** is first read in and the code information in the two-dimensional code **122** is then read in has been described, the reading in order of the code **24** and the two-dimensional code **122** may be reversed. If a Yes decision is made in step S**7,** then, in step S**8,** the information indicating that the wire routing operation included in the code information has been finished (the first electric wire **11** has been routed) is stored, along with a time at which the first electric wire **11** has been routed, in the storing section **34** of the administrating terminal **3,** and the flow returns (the flow returns to step S**1** and the processing is continued). Note that, in the present embodiment, since the results of the code information collation in the administrating terminal **3** are not transmitted to the work terminal **2,** it is necessary to switch the images (drawings) displayed on the display device **2**a at the work terminal **2** end. Accordingly, the display device **2**a of the work terminal **2** may be configured in such a manner as to display thereon switching buttons for switching the drawings displayed on the display device **2**a, such as a forwarding button to display the next image (the next drawing) and a reversing button to display the previous image (the previous drawing). In the case where the results of the code information collation in the administrating terminal **3** are transmitted to the work terminal **2,** the collating section **31** may be configured in such a manner that if a Yes decision is made in step S**7,** then the collating section **31** transmits to the work terminal **2** the information indicating that the first code information and the second code information have matched each other, and thereby allows the work terminal **2** to display the next image (the next drawing) thereon. In addition, the display device **2**a of the work terminal **2** may be configured in such a manner as to, when the routing of all of the plurality of electric wires **11** has been completed, display an image (a drawing) with respect to the next wire harness **10** on the display device **2**a.

If a No decision is made in step **S7,** then, in step **S9,** the collating section **31** notifies the warning section **32** that the first code information and the second code information do not match each other. The warning section **32** transmits a mail including alert information to a preset address (an address that is configured to be able to be received by the operator's mobile phone **7**). After that, the flow returns (the flow returns to step S**1** and the processing is continued). After that, the operator having received the mail including the alert information performs a check with another electric wire **11.** Note that, if a No decision is made in step **S7,** then the flow may return to step **S4.**

### (Modifications)

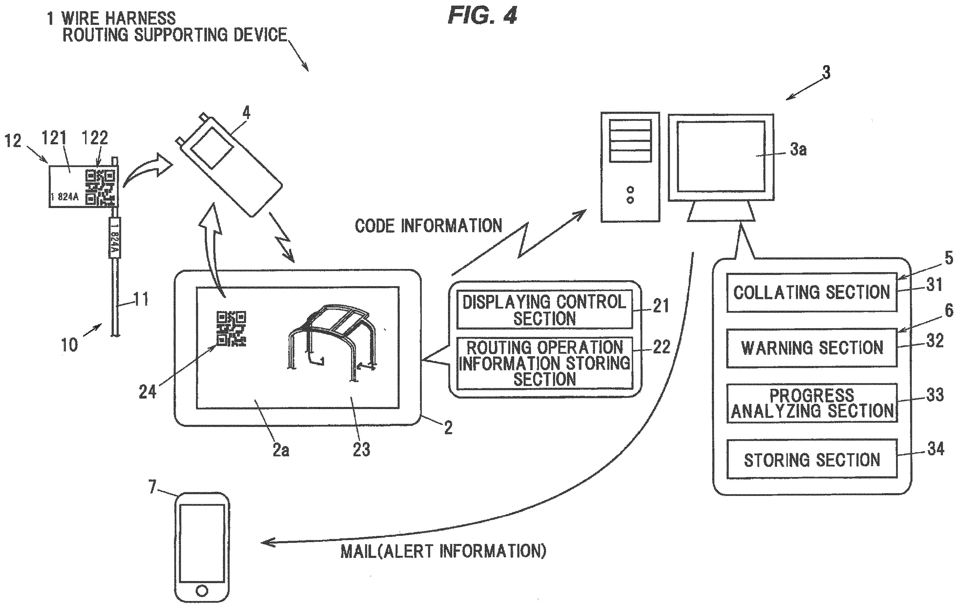

Although in the above embodiment, the case where the code reader **4** transmits the code information to the administrating terminal **3** has been described, the present invention is not limited to this, but may be configured in such a manner that, as shown in **FIG. 4****,** the code reader **4** transmits the code information to the work terminal **2,** for example, by means of a wireless communication such as a Bluetooth (registered trademark) or the like, and that code information is transmitted from the work terminal **2** to the administrating terminal **3** by means of a wireless communication such as a Wi-Fi (registered trademark).

Further, although in the above embodiment, the collating section **31** and the warning section **32** are being mounted in the administrating terminal **3,** the collating section **31** and the warning section **32** may be mounted in the work terminal **2.** In this case, the results of the code information collation in the collating section **31** are transmitted from the work terminal **2** to the administrating terminal **3,** and are stored, along with the time at which the code information collation has been performed, in the storing section **34** of the administrating terminal **3.** By mounting the warning section **32** in the work terminal **2,** it is possible to display a warning on the work terminal **2** and thereby allow the warning means **6** to have a simpler configuration. In addition, in this case, the displaying control section **21** of the work terminal **2** can also be configured in such a manner that, when, as a result of the code information collation of one of the plurality of electric wires **11** with the collating section **31,** the code information in the two-dimensional code **122** and the code information in the code **24** do not match each other, the displaying control section **21** does not perform the displaying of the next wire routing operation..

Further, the progress analyzing section **33** and the storing section **34** of the administrating terminal **3** may also be mounted in the work terminal **2.** In this case, the information on the progress status is transmitted to the administrating terminal **3** and is displayed on the display device **3**a of the administrating terminal **3.**

Further, although in the above embodiment, the progress status is being displayed only on the display device **3**a of the administrating terminal **3,** the present invention is not limited to this, but may be configured in such a manner that the data on the progress status is transmitted to the work terminal **2** to display the progress status on the display device **2**a of the work terminal **2.** This allows not only the administrator but also the operator to proceed with the routing operation while checking the progress status.

Further, although in the above-described embodiment, the information on the plurality of electric wires **11** to be subjected to the wire routing operation is using the code information in the respective codes **24** having been read in by the code reader **4,** the present invention is not limited to this, but may be configured in such a manner that the information on the plurality of electric wires **11** to be subjected to the wire routing operation is prestored in the routing operation information storing section **22** of the work terminal **2** or the storing section **34** of the administrating terminal **3** in the wire routing operation order of the plurality of electric wires **11.** This makes it possible to read in only the respective two-dimensional codes **122** with the code reader **4,** collate the code information in those respective two-dimensional codes **122** and the prestored information on the plurality of electric wires **11** to be subjected to the wire routing operation, and check whether the respective wire routing operations of the plurality of electric wires **11** are being performed in the correct order, and therefore makes it possible to enhance the operation efficiency of the routing operation of the wire harness **10.** In this case, the function of displaying the codes **24** on the display device **2**a of the work terminal **2** can be omitted.

Further, although in the above embodiment, the wire routing operation of each of the plurality of electric wires **11** is being performed by using the work terminal **2,** the work terminal **2** can also be omitted. For example, the wire routing operation of the plurality of electric wires **11** can also be performed by using a paper sheet with a wiring diagram printed thereon. In this case, for example, the wire routing operation order of the plurality of electric wires **11** and the respective codes **24** thereof may be written on the paper sheet with the wiring diagram printed thereon, and the code information in those respective codes **24** and the respective two-dimensional codes **122** on the respective identification marks **12** of the plurality of electric wires **11** may be collated.

### (Actions and advantageous effects of the embodiment)

As described above, the wire harness routing supporting device **1** according to the present embodiment includes the identification marks **12,** which are configured to identify the plurality of electric wires **11** constituting the wire harness **10** (or the respective connectors of the plurality of electric wires **11** being provided on the respective one end portions of the plurality of electric wires **11**), and which are being fitted to the respective one end portions of the plurality of electric wires **11** respectively (or to the respective connectors of the plurality of electric wires **11** respectively), the code reader **4** as the reading in section configured to read in the respective identification marks **12** of the plurality of electric wires **11,** and the wire routing operation collating means **5** including the collating section **31** configured to collate the information in the respective identification marks **12** having been read in by the code reader **4,** and the information on the plurality of electric wires **11** (or the respective connectors of the plurality of electric wires **11**) to be subjected to the wire routing operation.

This makes it possible to proceed with the wire routing operation while checking whether each of the plurality of electric wires **11** to be subjected to the wire routing operation is correct, and therefore makes it possible to perform the more secure wire routing operation. As a result, it is possible to suppress the occurrence of such a human error as to cause an electric wire **11** routing different from an electric wire **11** routing indicated on the display device **2**a of the work terminal **2.** In addition, by storing the results of the code information collation of each of the plurality of electric wires **11,** it is possible to keep track of the history of the wire routing operation, and it is also possible for the administrator or the like to know the progress status. Further, by storing the respective collation times (the respective wire routing starting or ending times) of the plurality of electric wires **11,** it is possible to know the times taken in the respective wire routing operations of the plurality of electric wires **11,** and it is therefore possible to analyze the respective wire routing operations of the plurality of electric wires **11** to thereby ensure the efficiency improvement of the respective wire routing operations of the plurality of electric wires **11.**

Although the embodiments of the present invention have been described above, the above described embodiments are not to be construed as limiting the inventions according to the appended claims. Further, it should be noted that not all the combinations of the features described in the embodiments are indispensable to the means, which is configured to solving the problem of the invention.

Further, the present invention can be appropriately modified. For example, the identification marks **12** may be configured in such a manner as to include character information along with the two-dimensional codes **122,** and if the respective two-dimensional codes **122** printed on the identification marks **12** fail to be read in due to staining or wrinkling or the like, the collating operation may be performed by the operator inputting the character information recorded in the identification marks **12** into the code reader **4** (e.g., a mobile phone or the like).

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

## Claims

1. A wire harness routing supporting device (1), which is configured to be used in routing, in a vehicle which is a routing target, a wire harness (10) including a plurality of electric wires (11), wherein identification marks (12) are fitted to respective one end portions of the plurality of electric wires (11) or to respective connectors of the plurality of electric wires (11), to identify the plurality of electric wires (11) or the respective connectors, the device comprising:
a work terminal (2) including a displaying control section (21) therein configured to in turn display an image of the vehicle including images of a frame and devices for the vehicle and images of respective routing paths of the plurality of electric wires (11) on a display device (2a) in accordance with a preset order of a wire routing operation of the plurality of electric wires (11), while displaying, on the display device (2a), codes (24) corresponding to the respective identification marks (12) of the plurality of electric wires (11) or the respective identification marks (12) of the respective connectors, respectively, to be subjected to the wire routing operation;
a reader (4) configured to read in the respective identification marks (12) and the respective codes (24); and
an administrating terminal (3) including a collating section (31) configured to collate information in the respective identification marks (12) having been read in by the reader (4) and information in the respective codes (24) having been read in by the reader (4).

2. The wire harness routing supporting device (1) according to claim 1, wherein the collating section (31) includes a storing means configured to store a time at which the collating has been performed, in a storing section (34).

3. The wire harness routing supporting device (1) according to claim 2, further comprising:
a progress analyzing section (33) configured to analyze a progress status of the routing operation of the wire harness (10) based on the information having been stored in the storing section (34).

4. The wire harness routing supporting device (1) according to any one of claims 1 to 3, further comprising:
a warning means (6) configured to generate a warning to an operator performing the wire routing operation, when, as a result of the collating having been performed, the information in the respective identification marks (12) and the information on the plurality of electric wires (11) or the respective connectors, to be subjected to the wire routing operation, are not matching each other.

5. A wire harness routing supporting method, for performing a wire harness routing supporting in routing, in a vehicle which is a routing target, a wire harness (10) including a plurality of electric wires (11) each including respective one end portions or respective connectors being provided on those respective one end portions, the method comprising:
fitting identification marks (12) to the respective one end portions of the plurality of electric wires (11) constituting the wire harness (10) or to the respective connectors of the plurality of electric wires (11) on the respective one end portions of the plurality of electric wires (11), to identify the plurality of electric wires (11) or the respective connectors of the plurality of electric wires (11);
with a work terminal (2), in turn displaying an image of the vehicle including images of a frame and devices for the vehicle and images of respective routing paths of the plurality of electric wires (11) on a display device (2a) in accordance with a preset order of a wire routing operation of the plurality of electric wires (11), while displaying, on the display device (2a), codes (24) corresponding to the respective identification marks (12) of the plurality of electric wires (11) or the respective identification marks (12) of the respective connectors, respectively, to be subjected to the wire routing operation;
with a reader (4), reading in the respective identification marks (12) and the respective codes (24); and
with an administrating terminal (3), collating information in the respective identification marks (12) having been read in by the reader (4) and information in the respective codes (24) having been read in by the reader (4).

6. The wire harness routing supporting device according to any one of claims 1 to 4, wherein the collating section (31) of the administrating terminal (3) is configured in such a manner that when it has determined that the information in the respective identification marks (12) and the information in the respective codes (24) are matching each other, it transmits to the work terminal (2) information indicating that the information in the respective identification marks (12) and the information in the respective codes (24) have matched each other, and thereby enables the work terminal (2) to display a next one of the images of the respective routing paths of the plurality of electric wires (11) on the display device (2a).

## Patentansprüche

1. Kabelbaum-Führungsunterstützungsvorrichtung (1), die so konfiguriert ist, dass sie beim Führen eines Kabelbaums (10), der eine Vielzahl elektrischer Drähte (11) enthält, in einem Fahrzeug, das ein Führungsziel ist, verwendet werden kann, wobei Identifikationsmarkierungen (12) an jeweiligen Endabschnitten der Vielzahl elektrischer Drähte (11) oder an jeweiligen Verbindern der Vielzahl elektrischer Drähte (11) angebracht sind, um die Vielzahl elektrischer Drähte (11) oder die jeweiligen Verbinder zu identifizieren, wobei die Vorrichtung umfasst:
ein Arbeitsterminal (2), das einen Anzeigesteuerabschnitt (21) enthält, der so konfiguriert ist, dass er seinerseits ein Bild des Fahrzeugs, das Bilder eines Rahmens und von Vorrichtungen für das Fahrzeug enthält, und Bilder jeweiliger Verlegungspfade der mehreren elektrischen Drähte (11) auf einer Anzeigevorrichtung (2a) gemäß einer voreingestellten Reihenfolge eines Drahtverlegungsvorgangs der mehreren elektrischen Drähte (11) anzeigt, während auf der Anzeigevorrichtung (2a) Codes (24) angezeigt werden, die den jeweiligen Identifikationsmarkierungen (12) der mehreren elektrischen Drähte (11) bzw. den jeweiligen Identifikationsmarkierungen (12) der jeweiligen Verbinder entsprechen, die dem Drahtführungsvorgang unterzogen werden sollen;
ein Lesegerät (4), das so konfiguriert ist, dass es die jeweiligen Identifikationsmarkierungen (12) und die jeweiligen Codes (24) einliest; und ein Verwaltungsterminal (3) mit einem Vergleichsabschnitt (31), der so konfiguriert ist, dass er Informationen in den jeweiligen Identifikationsmarkierungen (12), die von dem Leser (4) eingelesen wurden, und Informationen in den jeweiligen Codes (24), die von dem Leser (4) eingelesen wurden, vergleicht.

2. Kabelbaum-Führungsunterstützungsvorrichtung (1) nach Anspruch 1, wobei der Vergleichsabschnitt (31) ein Speichermittel enthält, das so konfiguriert ist, dass es einen Zeitpunkt, zu dem der Vergleich durchgeführt wurde, in einem Speicherabschnitt (34) speichert.

3. Kabelbaum-Führungsunterstützungsvorrichtung (1) nach Anspruch 2, ferner umfassend:
einen Fortschrittsanalyseabschnitt (33), der so konfiguriert ist, dass er einen Fortschrittsstatus des Führungsvorgangs des Kabelbaums (10) auf der Grundlage der in dem Speicherabschnitt (34) gespeicherten Informationen analysiert.

4. Die Kabelbaum-Führungsunterstützungsvorrichtung (1) nach einem der Ansprüche 1 bis 3, ferner umfassend:
ein Warnmittel (6), das so konfiguriert ist, dass es eine Warnung für einen Bediener erzeugt, der den Kabelführungsvorgang durchführt, wenn als Ergebnis des durchgeführten Vergleichs die Informationen in den jeweiligen Identifikationsmarkierungen (12) und die Informationen auf der Vielzahl von elektrischen Drähten (11) oder den jeweiligen Verbindern, die dem Drahtführungsvorgang unterzogen werden sollen, nicht miteinander übereinstimmen.

5. Verfahren zum Unterstützen der Kabelbaumverlegung zum Durchführen einer Kabelbaumverlegungsunterstützung beim Verlegen eines Kabelbaums (10) in einem Fahrzeug, das ein Verlegungsziel ist, wobei der Kabelbaum (10) eine Vielzahl elektrischer Drähte (11) enthält, die jeweils entsprechende Endabschnitte oder entsprechende Verbinder enthalten, die an diesen entsprechenden Endabschnitten vorgesehen sind, wobei das Verfahren umfasst:
Anbringen von Identifikationsmarkierungen (12) an den jeweiligen einen Endabschnitten der Mehrzahl von elektrischen Drähten (11), die den Kabelbaum (10) bilden, oder an den jeweiligen Verbindern der Mehrzahl von elektrischen Drähten (11) an den jeweiligen Endabschnitten der Mehrzahl von elektrischen Drähten (11), um die Mehrzahl von elektrischen Drähten (11) oder die jeweiligen Verbinder der Mehrzahl von elektrischen Drähten (11) zu identifizieren;
mit einem Arbeitsterminal (2), das seinerseits ein Bild des Fahrzeugs, das Bilder eines Rahmens und von Vorrichtungen für das Fahrzeug enthält, und Bilder jeweiliger Verlegungspfade der Mehrzahl elektrischer Drähte (11) auf einer Anzeigevorrichtung (2a) in Übereinstimmung mit einer voreingestellten Reihenfolge einer Drahtverlegungsoperation der Mehrzahl elektrischer Drähte (11) anzeigt, während auf der Anzeigevorrichtung (2a) Codes (24) angezeigt werden, die den jeweiligen Identifikationsmarkierungen (12) der Vielzahl elektrischer Drähte (11) bzw. den jeweiligen
Identifikationsmarkierungen (12) der jeweiligen Verbinder entsprechen, die dem Drahtverlegungsvorgang unterzogen werden sollen;
mit einem Lesegerät (4), das die jeweiligen Identifikationsmarken (12) und die jeweiligen Codes (24) einliest; und
mit einem Verwaltungsterminal (3), das Informationen in den jeweiligen Identifikationsmarken (12), die von dem Leser (4) eingelesen wurden, und Informationen in den jeweiligen Codes (24), die von dem Leser (4) eingelesen wurden, vergleicht.

6. Kabelbaum-Führungsunterstützungsvorrichtung nach einem der Ansprüche 1 bis 4, wobei der Vergleichsabschnitt (31) des Verwaltungsterminals (3) so konfiguriert ist, dass er, wenn er festgestellt hat, dass die Informationen in den jeweiligen Identifikationsmarken (12) und die Informationen in den jeweiligen Codes (24) übereinstimmen, er an das Arbeitsterminal (2) Informationen überträgt, die anzeigen, dass die Informationen in den jeweiligen Identifikationsmarkierungen (12) und die Informationen in den jeweiligen Codes (24) übereinstimmen, und dadurch das Arbeitsterminal (2) in die Lage versetzt, ein nächstes der Bilder der jeweiligen Führungspfade der Mehrzahl von elektrischen Drähten (11) auf der Anzeigevorrichtung (2a) anzuzeigen.

## Revendications

1. Un dispositif (1) d'assistance au routage de faisceaux de fils électriques, qui est configuré pour être utilisé pour faire cheminer, dans un véhicule qui est une cible de routage, un faisceau de fils électriques (10) comprenant une pluralité de fils électriques (11), des marques d'identification (12) étant montées sur des premières parties d'extrémité respectives de la pluralité de fils électriques (11) ou sur des connecteurs respectifs de la pluralité de fils électriques (11), pour identifier la pluralité de fils électriques (11) ou les connecteurs respectifs, le dispositif comprenant :
un terminal de travail (2) comprenant en lui une section de commande d'affichage (21) configurée pour afficher à son tour une image du véhicule comprenant des images d'un châssis et de dispositifs pour le véhicule et des images de chemins de routage respectifs de la pluralité de fils électriques (11) sur un dispositif d'affichage (2a) conformément à un ordre prédéfini d'une opération de routage de fils de la pluralité de fils électriques (11), tout en affichant, sur le dispositif d'affichage (2a), des codes (24) correspondant aux marques d'identification respectives (12) de la pluralité de fils électriques (11) ou des marques d'identification respectives (12) des connecteurs respectifs, respectivement, à soumettre à l'opération de routage des fils ;
un lecteur (4) configuré pour lire les marques d'identification respectives (12) et les codes respectifs (24) ; et
un terminal d'administration (3) comprenant une section de regroupement (31) configurée pour rassembler des informations dans les marques d'identification respectives (12) ayant été lues par le lecteur (4) et des informations dans les codes respectifs (24) ayant été lues par le lecteur (4).

2. Le dispositif (1) d'assistance au routage de faisceaux de fils électriques selon la revendication 1, dans lequel la section de regroupement (31) comprend un moyen de stockage configuré pour stocker un moment auquel le regroupement a été effectué, dans une section de stockage (34).

3. Le dispositif (1) d'assistance au routage de faisceaux de fils électriques selon la revendication 2, comprenant en outre :
une section d'analyse de progression (33) configurée pour analyser un état de progression de l'opération de routage du faisceau de fils électriques (10) sur la base des informations ayant été stockées dans la section de stockage (34).

4. Le dispositif (1) d'assistance au routage de faisceaux de fils électriques selon l'une quelconque des revendications 1 à 3, comprenant en outre :
un moyen d'avertissement (6) configuré pour générer un avertissement à l'intention d'un opérateur effectuant l'opération de routage de fils, lorsque, suite au regroupement ayant été effectué, les informations dans les marques d'identification respectives (12) et les informations sur la pluralité de fils électriques (11) ou les connecteurs respectifs, devant être soumis à l'opération de routage des fils, ne correspondent pas les uns aux autres.

5. Un procédé d'assistance au routage de faisceaux de fils électriques, permettant d'effectuer une assistance au routage de faisceaux de fils électriques pour le routage, dans un véhicule qui est une cible de routage, un faisceau de fils électriques (10) comprenant une pluralité de fils électriques (11) comprenant chacun des parties de première extrémité respectives ou des connecteurs respectifs étant prévus sur ces parties de première extrémité respectives, le procédé comprenant :
le fait d'apposer des marques d'identification (12) sur les premières parties d'extrémité respectives de la pluralité de fils électriques (11) constituant le faisceau de fils électriques (10) ou sur les connecteurs respectifs de la pluralité de fils électriques (11) sur les premières parties d'extrémité respectives de la pluralité de fils électriques (11), pour identifier la pluralité de fils électriques (11) ou les connecteurs respectifs de la pluralité de fils électriques (11) ;
avec un terminal de travail (2), le fait d'afficher à son tour une image du véhicule comprenant des images d'un châssis et de dispositifs pour le véhicule et des images de chemins de routage respectifs de la pluralité de fils électriques (11) sur un dispositif d'affichage (2a) en conformité à un ordre prédéfini d'une opération de routage des fils de la pluralité de fils électriques (11), tout en affichant, sur le dispositif d'affichage (2a), des codes (24) correspondant aux marques d'identification respectives (12) de la pluralité de fils électriques (11) ou les marques d'identification respectives (12) des connecteurs respectifs, respectivement, devant être soumis à l'opération de routage des fils ;
avec un lecteur (4), le fait de lire les marques d'identification respectives (12) et les codes respectifs (24) ; et
avec un terminal d'administration (3), le fait de collecter des informations dans les marques d'identification respectives (12) ayant été lues par le lecteur (4) et les informations dans les codes respectifs (24) ayant été lues par le lecteur (4).

6. Le dispositif d'assistance au routage de faisceaux de fils électriques selon l'une quelconque des revendications 1 à 4, dans lequel la section de regroupement (31) du terminal d'administration (3) est configurée de telle manière que, lorsqu'elle a déterminé que les informations dans les marques (12) d'identification respectives et les informations dans les codes respectifs (24) correspondent les unes aux autres, elle transmette au terminal de travail (2) des informations indiquant que les informations dans les marques d'identification respectives (12) et les informations dans les codes respectifs (24) correspondent les unes aux autres, et permet ainsi au terminal de travail (2) d'afficher une image suivante parmi les images des chemins de routage respectifs de la pluralité de fils électriques (11) sur le dispositif d'affichage (2a).
